# EUROPEAN PATENT SPECIFICATION

(11) **EP 0 932 631 B1**
(45) Date of publication and mention of the grant of the patent: **23.08.2000**
(21) Application number: 97948811.1
(22) Date of filing: 21.10.1997
(51) Int. Cl.: C08F 218/08, C08F 14/06, C07C 409/00

(54) **PROCESS TO MAKE INITIATOR COMPOSITIONS COMPRISING POLYVINYL ALCOHOL AND SURFACTANT**
Verfahren zur Herstellung einer Initiatorzusammensetzung auf Basis von Polyvinylalkohol und Emulgator
PROCEDE DE FABRICATION DE COMPOSITIONS D'INITIATEURS CONTENANT DE L'ALCOOL POLYVINYLIQUE ET UN TENSIO-ACTIF

(30) Priority: 30.10.1996 EP 96203017
(43) Date of publication of application: 04.08.1999
(73) Proprietor: Akzo Nobel N.V., 6824 BM Arnhem (NL)
(72) Inventor: O, Boen Ho, NL-3514 CW Utrecht (NL); MALTHA, Annemarieke, NL-6605 TG Wijchen (NL); WESTMIJZE, Hans, NL-7437 BB Bathmen (NL); ALFERINK, Petrus, Johannes, Theodorus, NL-6931 GD Westervoort (NL)
(74) Representative: Schalkwijk, Pieter Cornelis
(86) International application number: EP9705919
(87) International publication number: WO9818835

(56) References cited:
- EP-A- 0 279 384
- EP-A- 0 385 734
- EP-A- 0 492 712
- EP-A- 0 517 290
- GB-A- 2 068 008
- GB-A- 2 068 009

## Description

### Introduction

The present invention relates to a process to make storage stable and low-viscous aqueous suspensions comprising thermally labile organic compounds, at least one polyvinyl alcohol, and at least one non-ionic surfactant, to suspensions that can be obtained by this process, and to the use of these suspensions in polymerization processes.

### Background of the invention

Water-based suspensions are well-known as safe formulations for thermally labile organic compounds such as organic peroxides and azo-initiators. Such formulations are known for their ease of handling, allowing automation of the polymerization processes in which they are used as a source of free radicals.

US 4,039,475 and US 4,092,470 describe the preparation and use, in the polymerization of vinyl chloride monomer, of initiator suspensions which contain a combination of two non-ionic emulsifiers., viz. one with an HLB value not higher than 12.5 and one with an HLB value not lower than 12.5. The HLB value of the exemplified emulsifier combinations is below 14.0. Alternatively, one non-ionic emulsifier with an HLB value not higher than 12.5 is combined with one anionic emulsifier. The suspensions are prepared by vigorously mixing and homogenizing the components. GB-B-2 068 009 elaborates on this concept and prescribes the use of specific ethoxylated non-ionic emulsifiers with an HLB value above 15 in combination with a non-ethoxylated non-ionic emulsifier with an HLB value below 9.

However, the early introduction and acceptance of these suspensions was hindered by production problems, their physical instability, mostly resulting in the formation of a solid cake at the bottom and a watery layer on top of the container, their effect on the polymer production process, and/or their adverse effect on the properties of the polymer made with them, particularly in polymerization processes where vinyl chloride monomer is used. For example, when formulating bis(4-tert-butylcyclohexyl) peroxydicarbonate in the way according to the prior art, we were not able to make a suspension that was storage stable, had the desired particle size distribution and an acceptable viscosity, without that the properties of poly vinyl chloride produced therewith were adversely influenced.

EP-A-0 106 627 and EP-A-0 517 290 disclose a melt-process in which a solid peroxide consecutively is slurried in water, melted, emulsified in the water, and solidified, to give a stable suspension of finely divided peroxide particles. In the process a variety of emulsifiers and protective colloids may be used. Allegedly, this process alleviates some of the problems of the earlier suspensions. However, only specific initiators, i.e. ones that allow melting without excessive decomposition, can be formulated in this way. Also, even if excessive decomposition does not occur, safety considerations may be in the way of employing this process. In order to reduce decomposition of the initiators during storage and handling, US 4,552,682 proposes to add phenolic antioxidants to chemically stabilize suspensions of peroxydicarbonates. However, such antioxidants are known to interfere with the free radicals formed in the polymerization process in which the suspensions are used and, therefore, are typically not acceptable. Hence, the use of phenolic antioxidants cannot relieve the decomposition problems that are encountered in the process of EP-A-0 106 627 and EP-A-0 517 290.

Thus, there has been an ongoing search for a process to make improved peroxide suspensions by means of conventional milling of the solid peroxide in the presence of water. The main focus has been on improving the physical stability of the various suspensions and/or finding a solution to production problems. As a result, specific ingredients and formulations have been proposed in various documents. EP-A-0 263 619 discloses the use of specific crystalline cellulose. US 4,692,427, pertaining to suspensions of aromatic diacyl peroxides, teaches the use of magnesium aluminium silicate in combination with an alkali metal carboxymethyl cellulose. JP-A-61127701 combines a non-ionic surfactant, a colloidal protective agent, and a polyphosphoric acid alkali metal salt. JP-A-01095102 discloses a combination of PVA, gelatin or cellulose derivatives with a specific copolymer of carbon monoxide and (meth)acrylate containing anionic or cationic groups. EP-A-0 492 712 discloses the use of polyether polysiloxanes or a water-soluble copolymer of a C₈-C₂₄ α-olefin and a specific α,β-unsaturated dicarboxylic acid ester in order to enable the production of finely divided peroxide dispersions. However, since the ingredients of the suspensions are not fully compatible with the polymerization process in which the suspensions are eventually used, these formulations also are generally not acceptable.

Therefore, the main disadvantage of the described suspensions of thermally labile organic compounds is that they suffer from production problems, do not fulfill storage stability requirements and/or are not universally applicable in polymerization processes. More specifically, it is observed that some storage stable peroxide suspensions can be produced according to the prior art, but when they are used in vinyl chloride (co)polymerization, one or more properties of the resulting polymer is not acceptable.

In respect of applicability in vinyl chloride (co)polymerization processes, it is noted that current initiator suspensions have an effect on the polymer morphology, for instance porosity, the electrical properties of the polymer, and the fish eye level. Further, these initiator suspensions typically suffer from other disadvantages, such as high viscosities, which make them difficult to handle, or in some cases the suspensions cannot be milled to reduce the particle size of the organic compound. A reduction of the peroxide concentration in order to reduce the viscosity and/or the milling problems often is not acceptable from an economic point of view.

Accordingly, there still is a need for improved peroxide suspensions and an improved process to make them. More specifically, there is a need for improved, chemically and physically stable, compositions of thermally labile organic compounds which are generally applicable in polymerization processes, particularly in the polymerization process of vinyl chloride monomer. The improved compositions are to combine a high concentration of the thermally labile organic compound with an acceptable viscosity, with the thermally labile organic compound having a small average particle size, and are not to affect the properties of the polymer produced therewith. These and other objects of the present invention will be apparent from the summary and the detailed description which follow.

### Summary of the invention

After many years of intensive research and development in the field of suspensions and emulsions of thermally labile organic compounds, we have now found compositions that fulfill all or most of the above-identified requirements and which can be produced by means of conventional milling techniques.

The present invention relates, in a first embodiment, to a process to prepare an aqueous suspension comprising:
- from 35 to 60% by weight of the total formulation of one or more solid thermally labile organic compounds,
- 0.5-10% by weight of the total formulation of one or more polyvinyl alcohols having an average degree of hydrolysis from 60 to less than 80%, with the proviso that no polyvinyl alcohol with a degree of hydrolysis of less than 55% is employed
- 0.05 to 1% by weight of the total formulation of one or more emulsifiers having an average HLB value from 14.5 to 20.0,
wherein at least one solid thermally labile organic compound is milled in water.

The present invention, in a second embodiment, relates to suspensions of bis(4-tert-butylcyclohexyl) peroxydicarbonate, dimyristyl peroxydicarbonate and/or lauric peracid that are obtainable by said process.

In a further embodiment, the invention relates to a process for the polymerization of vinyl chloride alone or in admixture with up to 40 weight percent of one or more ethylenically unsaturated monomers copolymerizable therewith, oligomers or (co)polymers of the aforementioned monomers, and mixtures of one or more of the monomers, oligomers, and (co)polymers, characterized in that a peroxidic polymerization initiator and chain transfer agent is used in the form of an aqueous suspension as set forth above.

These and other aspects will be discussed in more detail in the following description and examples.

### Detailed description of the invention

According to the first aspect of the present invention a process is provided to prepare aqueous suspensions of thermally labile organic compounds by milling and/or homogenizing the solid peroxide in an aqueous medium preferably comprising one or more particular protective colloids and one or more emulsifiers. More preferably, the aqueous medium comprises one or more particular protective colloids and one or more emulsifiers. The term "thermally labile organic compound," as used in this specification, defines compounds that will form free radicals upon thermal decomposition. This class of compounds encompasses organic peroxides, azo-initiators, C-C initiators, NO-compounds, and peroxycarboxylic acids. Preferred compounds for use in the present invention are organic peroxides and azo-initiators. More preferred are organic peroxides.

More particularly, preferred organic peroxides for use in the present invention are diacyl peroxides, peracids, and peroxydicarbonates. More preferred are peroxides selected from dicyclohexyl peroxydicarbonate, bis(4-tert-butylcyclohexyl) peroxydicarbonate, dimyristyl peroxydicarbonate, dicetyl peroxydicarbonate, didecyl peroxydicarbonate, didecanoyl peroxide, dilauroyl peroxide, lauric peracid, and mixtures thereof. More preferred still are suspensions of bis(4-tert-butylcyclohexyl) peroxydicarbonate, dimyristyl peroxydicarbonate, and/or lauric peracid. The most preferred organic peroxide formulated according to the invention is bis(4-tert-butylcyclohexyl) peroxydicarbonate. This particular peroxide shows an unacceptable thermal decomposition rate when melted and cannot be processed or formulated in ways involving a melting step. However, also for the other preferred compounds the process according to the invention, where the peroxide is milled/homogenized in the solid state, is preferred from a safety point of view.

The amount of thermally labile organic compounds to be used in the process to make the aqueous suspension usually falls in the range of 35-60% by weight, based on the weight of the suspension. Preferably, 35-45% by weight of the compound is present. Most preferred are concentrated suspensions where the thermally labile organic compound is present in a concentration of 35-50% by weight. At concentrations of less than 35% by weight the cost of transportation becomes prohibitive and at concentrations above 60% by weight the products cannot be handled easily and may even be unsafe.

The storage stability of the suspension made in the process according to the invention, preferably is greater then 2 months, more preferably more than 3 months.

The Brookfield viscosity of the suspension that is made in the process according to the invention, preferably is between 750 to 5000 mPa.s, more preferably between 750 and 3750 mPa.s. More preferably still, such a Brookfield viscosity is combined with an Erichsen viscosity from 50 to 250 mPa.s. Most preferred are suspensions with a Brookfield viscosity from 1000 to 2500 mPa.s and an Erichsen viscosity from 70 to 150 mPa.s.

The particle size of the thermally labile organic compound in the suspension is preferably very small, in order to obtain all desired properties of both the suspension and the polymers prepared in processes where the suspension is used. Therefore, the d₉₀ of the particle size distribution is preferably less than 20 µm, more preferably less than 15 µm. More preferred are suspensions where the organic compound has a particle size distribution with a d₉₀ within the range of 0.1-15 µm. The most preferred suspensions are characterized by a d₉₀ below 10 µm.

In the process according to the invention, use is made of an aqueous medium in which the thermally labile organic compound is dispersed. This aqueous medium preferably comprises from 0.5 to 20% by weight of at least one specific polyvinyl alcohol as the protective colloid (based on the total weight of the suspension). More preferably, the colloid makes up 1 to 10% by weight, most preferably from 1 to 5% by weight, of the total formulation.

More particularly, the specific polyvinyl alcohols (PVAs) that can be used in the compositions according to the invention are saponified polyvinyl acetates with a degree of hydrolysis of between 60 and less than 80%. Preferably, the degree of hydrolysis of the PVA is from 62 to 78%. If more than one PVA is used, the indicated degree of hydrolysis is generally the weight averaged degree of hydrolysis of the products used, with the proviso that all PVA must have a degree of hydrolysis greater than 55%. Although the PVAs may be combined with other known colloids, it is preferred to use the referenced PVAs exclusively.

The emulsifiers used in the compositions that can be produced according to the present invention are characterized by their HLB value being from 14.5 to 20.0. The HLB value is indicative of the hydrophilic-lipophilic balance, as described in "The Atlas HLB-system, a time saving guide to emulsifier selection" published by Atlas Chemical Industries Inc., 1963. For blends of emulsifiers the HLB value is the weight average HLB value of the components. Preferably, emulsifiers with an HLB value from 15.7 to 20.0 are used. More preferred are emulsifiers with an HLB value from 16.9 to 20.0. More preferred still are emulsifiers with an HLB value from 17.8 to 20.0. Most preferred are fatty alcohol ethoxylates and fatty ester ethoxylates with an HLB value in the indicated range. Less preferred emulsifiers are the ethoxylated sorbitan esters since they often lead to problems in respect of the storage stability of the suspension. Typically, the emulsifiers are used in a concentration less than 1% by weight of the total formulation. Preferred are emulsifier concentrations from 0.05 to 0.8 % by weight of the total formulation.

In the process according to the invention, the aqueous medium may further comprise one or more thickeners in a concentration up to 2% by weight of the total formulation. Preferably, the thickener makes up less than 1% by weight of the suspension. Non-limiting examples of thickeners useful in the formulation are xanthane gum, Arabic gum, and alginates.

Further, other standard additives, including pH-adjusting agents such as calcium oxide or phosphate buffers, sequestering agents, and, if desired, biocides, e.g. fungicides, can be used. The concentration of these additives will depend on the desired effect and the other ingredients in the suspension. Given the information presented here, the skilled man will have no problem in selecting appropriate concentrations of the individual ingredients in the suspension of choice.

All of the ingredients listed above preferably are part of the aqueous medium in which the solid thermally labile organic compound is dispersed. However, one or more of the ingredients may also be added after the dispersion step of the thermally labile organic compound. In that case, it is preferred to make a suspension with a higher than desired concentration of the thermally labile organic compound(s) which is then subsequently diluted with a concentrated solution of the required ingredient.

The temperature of the aqueous medium prior to the milling/homogenization step is preferably below the lowest recommended storage temperature of the solid thermally labile organic compound(s) being dispersed. More preferably, the processing temperature is between 0 and 15°C. Most preferred is a temperature between 0 and 5°C. Lower temperatures are not very economical and may call for the use of undesired anti-freeze agents, while higher temperatures can result in undesired decomposition of the initiator.

The primary advantage of the present invention is that it provides a process to make chemically and physically stable, low viscous, concentrated suspensions of a thermally labile organic compound with a small average particle size and a good particle size distribution, which can be used in vinyl chloride polymerizations without affecting the electrical properties of the polymer. Preferred suspensions of said thermally labile organic compound mainly contain one or more PVAs as the protective colloid and minor quantities of one or more non-ionic emulsifiers. Therefore, the suspensions of the present invention do not adversely affect polymerization processes or any property of the resultant polyvinyl chloride (PVC). These suspensions can actually improve properties such as the fish eye level and the morphology of the resultant polymer. Hence, the suspensions according to the present invention enable the use of polymerization initiators which are efficient, easy to handle, and have a favourable effect on the polymer produced with them.

The process involves, preferably, a first mixing step in which the thermally labile organic compound is stirred into an aqueous medium comprising emulsifier(s) and protective colloid(s) to form a mixture; this mixture preferably is then milled to form a coarse suspension, after which, preferably, the compound is more finely divided by further milling or homogenization. If and when a thickener, pH stabilizer or other ingredient is used in the formulation, it may be added at any point in the production process. Preferably, such an ingredient is added in the form of a concentrated solution.

The mixing step only requires the use of a stirrer of any conventional type. For the step to form the coarse suspension typically use is made of a high shear mixer, for instance a colloid mill, high-shear rotor-stator mixers, highspeed pump, etc.. Milling the coarse dispersion to further reduce the particle size of the thermally labile organic compound can be done by any equipment that is able to induce still higher shear forces, or by impact mills. Examples of such suitable equipment include, high-frequency and ultrasonic oscillators, perl mills, roller mills, and homogenizers. Given that concentrated suspensions with partially saponified polyvinyl acetate were typically found to form a thick paste during milling, it is surprising and unexpected that such a milling process can be carried out in a convenient way on the concentrated suspensions of the present invention.

In a second embodiment, the invention relates to suspensions of bis(4-tert-butylcyclohexyl) peroxydicarbonate, dimyristyl peroxydicarbonate and/or lauric peracid that are obtainable by the above-mentioned process. Most preferred are suspensions of bis(4-tert-butylcyclohexyl) peroxydicarbonate. Until now, these suspensions could not be produced without substantial decomposition (in a melting process) or without a concentrated, low-viscous, storage stable suspension with small particle size being formed (milling process), or without the properties, such as morphology or electrical conductivity, of the polymer produced being adversely influenced.

The present invention also relates to a polymerization process where at least one of the above-described suspensions is used as (one of) the polymerization initiator(s) and chain transfer agent(s) in the polymerization of vinyl chloride alone or in admixture with up to 40 weight percent of one or more ethylenically unsaturated monomers copolymerizable therewith, oligomers and (co)polymers of the aforementioned monomers, and mixtures of two or more of these monomers, oligomers, and polymers. The use of these suspensions is further detailed below.

The polymerizable monomers for the present polymerization process include vinyl halides, particularly vinyl chloride, and ethylenically unsaturated monomers having at least one terminal unsaturated group. Examples of such ethylenically unsaturated monomers include esters of acrylic acid such as methyl acrylate, ethyl acrylate, butyl acrylate, octyl acrylate, cyanoethyl acrylate, and the like, esters of methacrylic acid such as methyl methacrylate, butyl methacrylate, and the like, styrene and styrene derivatives including α-methylstyrene, vinyl toluene, chlorostyrene and the like, acrylonitrile, ethyl vinyl benzene, vinyl acetate, vinyl naphthalene, etc., and di-olefins including, but not limited to, butadiene, isoprene, chloroprene, and the like, and other ethylenically unsaturated monomers known to those of ordinary skill in the art.

In addition, oligomers and polymers made from one or more of the above-identified monomers may also be reacted with other monomers, polymers or oligomers in the present polymerization process. Of course, mixtures of two or more of the polymerizable materials can be used. In all cases there will be at least 60% of vinyl chloride monomer, oligomer or polymer in the polymerizable mixture.

Generally, a polymerizable composition comprises 0.01-6.0% by weight of one or more thermally labile organic compounds (initiators), based on the polymerizable monomers, and when polymerizing vinyl chloride alone, preferably 0.01-0.3% by weight of the initiator, based on the monomer. If one or more of the initiators are in the form of a composition according to the invention, the amount of the composition is to be chosen such that the indicated amount of pure initiator is supplied. When peracid suspensions according to the invention are used as an initiator, a chain transfer agent or as a combined initiator and chain transfer agent in a vinyl chloride polymerization process, such suspensions may also be combined with the aforesaid initiator suspensions. Chain transfer agents are typically employed in a concentration of between 0.001 and 10.0% by weight of pure chain transfer agent, based on the polymerizable materials. Preferably, from 0.01 to 1% by weight of these chain transfer agents is used.

A significant advantage of the present process for the polymerization of vinyl chloride is that the use of suspensions of the present invention leads to greater flexibility in the polymerization process itself. More particularly, when the present solid peroxide compositions according to the state of the art are used in vinyl chloride polymerization, the peroxide composition must be added to the polymer before the mixture is brought to the polymerization temperature in order to avoid adverse effects, such as increased fish eye levels, on the properties of the resultant polymer. However, in the process of the present invention, the polymerization initiator may be added to the vinyl chloride monomer after it is heated to the polymerization temperature or may even be dosed stepwise or gradually during the polymerization reaction. These features provide greater flexibility in the polymerization process as well as a means of gaining better control over the process and the products of the process.

The polymerization process of the present invention typically is a suspension polymerization process in which an aqueous dispersion of vinyl chloride monomer and the polymerization initiator are heated to cause polymerization of the monomer as a result of free radical decomposition of the polymerization initiator. However, the suspensions obtainable by the process according to the invention can also be used in a so-called "mass polymerization" process. The polymerization conditions employed are the conventional conditions for vinyl chloride monomer polymerization. For a detailed description of the process conditions, as well as the types of monomers which can be polymerized by this method, reference may be made to US 3,825,509.

The present polymerization process, however, may differ slightly from that of US 3,825,509 in that it is not necessary to add the ingredients to the polymerization reactor in the order of water, dispersant, polymerization initiator, and, finally, monomer. While this conventional methodology is within the scope of the present invention, the present invention also encompasses reactions where the water, the dispersing agent, and the monomers are added to the reactor and heated to the polymerization temperature prior to the introduction of the polymerization initiator. In such reactions the polymerization initiator is added all at once, gradually or stepwise during the polymerization process.

Previously, it was considered disadvantageous to add a solid polymerization initiator at the reaction temperature, since the fish eye level would then increase to unacceptable levels. In the examples which follow it is demonstrated that the present suspensions do not significantly increase the fish eye level. Furthermore, dosing at reaction temperature may allow a better control of the polymerization rate in the polymerization process.

The polymerization process according to the invention results in polymers which exhibit desirable properties, including better electrical properties, lower fish eye levels, and, in some instances, improved polymer morphology, such as porosity.

The following examples are provided to further illustrate the present invention and are not to be interpreted as limiting the invention in any way.

### Experimental

### Materials:

The following PVAs were used:
Polyviol® M05/190 ex Wacker (approx. 82.5% hydrolysis)
Gohsenol® KH20 ex Nippon Gohsei (approx. 80% hydrolysis)
Polyviol® V03/240 ex Wacker (approx. 77% hydrolysis)
Gohsenol® KP08 ex Nippon Gohsei (approx. 73% hydrolysis)
Alcotex® 72.5 ex Harco (approx. 72.5% hydrolysis)
Ethapol® 66 ex CIRS (approx. 66% hydrolysis, microemulsion)
Polyvic® SP808 ex 3V (approx. 65% hydrolysis)
Unitika® UMR10M ex Unitika Chemical (approx. 65% hydrolysis)
Alcotex® 552P ex Harco (approx. 55.5% hydrolysis)
Gohsenol® LL02 ex Nippon Gohsei (approx. 48% hydrolysis)

The following non-ionic emulsifiers were used:
Berol® 08 ex Berol Nobel (HLB = 18.7)
Igepal® CO897ex GAF (HLB = 17.8)
Brij® 35 ex ICI (HLB = 16.9)
Brij®58 ex ICI (HLB = 15.7)
Cedepal® E710 ex Domtar (HLB = 14.4)
Elfapur® T110 ex Akzo Nobel (HLB = 13.5)

The thickener employed was a xanthane gum, Rhodigel® 23, supplied by Rhone Poulenc.

Bis(4-tert-butylcyclohexyl) peroxydicarbonate (Perkadox® 16), dicetyl peroxydicarbonate (Liladox® 90P) and dimyristyl peroxydicarbonate (Perkadox® 26) were supplied by Akzo Nobel and used as an initiator.

VCM was of polymerization grade, while all other materials were standard chemicals of reagent grade. These compounds were used without further purification.

### Procedures:

1. Suspensions were prepared by mixing the thermally labile organic compound in the aqueous phase containing the other ingredients in the proper ratio, with a turbine-type stirrer, at 10°C. Subsequently, the mixture was first dispersed with an Ultra-Turrax® rotor-stator dissolver for 5 minutes at 700 W stirring energy per kg of mixture, to form coarse suspensions and next milled with a 500 ml Drais® Perl Mill PM1. The perl mill was filled with 1-2 mm glass beads for 80% by volume. The coarse suspensions were milled at a rate of 400 ml/min at a temperature of 10°C maximum, preferably 5°C. Finally, the suspensions were deaerated.
2. The suspensions were characterized in terms of viscosity, particle size (distribution), and physical stability on aging (separation). The viscosity was determined with an Erichsen® Viscometer, type 332-1 and a Brookfield® LVT viscometer at 12 rpm, spindle 3. The particle size (distribution) was determined by light scattering techniques using a Malvern® Particle Sizer M3. Separation of the suspensions was determined visually by storing in 500 ml HDPE jars.
3. The polymerization reactions were carried out in a one-litre Büchi stainless steel autoclave with stirrer and baffle. The reactor was filled with aqueous protective colloid solution in which the phosphate buffer was dissolved. Depending on the tests to be performed (see below), one of the following methods was used:
   3.1 A suspension of the thermally labile organic compound was added in an amount of 0.07% pure peroxide, based on the vinyl chloride monomer. The reactor was then evacuated and flushed with nitrogen four times while stirring. After addition of the VCM, the mixture was heated to reaction temperature (53.5°C) in 60 minutes.
   3.2 The reactor was evacuated and flushed with nitrogen four times while stirring. Then VCM was mixed in at room temperature and the reaction mixture was heated, in 25 minutes, to 53.5°C. Subsequently, the suspension of the thermally labile organic compound was added in an amount of 0.07% pure peroxide, based on the vinyl chloride monomer, by means of an appropriate syringe through a septum.

   For both methods the reactor was cooled after 6 hours of polymerization time and excess vinyl chloride monomer was vented. The polyvinyl chloride was filtered, washed, dried overnight at 50°C, weighed, and analyzed. The conversion of the vinyl chloride monomer was determined by gravimetric analysis.
4. The DOP porosity and the volume resistivity of the PVC were determined by analyzing material from method 3.1, in accordance with DIN 53417 (centrifuge method) and ASTM D257-66 (22°C, 46% R.H.), respectively.
5. The fish eye level, particle size (distribution), and bulk density were analyzed in conventional ways on PVC obtained by method 3.2. The fish eye level was determined in accordance with the method of O. Leuchs, Kunststoffe, 50(4) 1960, pp. 227-234. Preferably, the fish eye level is as low as possible. The polyvinyl chloride mean particle size was determined with a Coulter Counter® (multisizer), and the bulk density was determined in a conventional way by means of an Erichsen DIN cup 243/11.8.

### Example 1

A suspension was prepared containing 2% by weight of Alcotex 72.5 (approx. hydr. 72.5%), 0.3% by weight of Igepal CO897 (HLB 17.8), 0.15% by weight of xanthane gum, 0.05% by weight of CaO, 40% by weight of Perkadox 16, the remainder being demineralized water.

The suspension showed excellent physical and chemical stability during more than 3 months of storage and had the following properties:

| | |
|---|---|
| d₅₀ (µm) | 5 |
| d₉₀ (µm) | 12 |
| Erichsen viscosity (mPa•s) | 140 |
| Brookfield viscosity (mPa•s) | 1530 |

The PVC produced using this suspension had the following properties:

| | |
|---|---|
| DOP porosity (%) | 22 |
| vol.resistivity (Ωcm) | 14•10¹³ |
| fish eyes (m⁻²) | 30 |
| average particle size (µm) | 160 |
| bulk density (g•ml⁻¹) | 0.40 |

### Example 2

Example 1 was repeated, except that Polyviol V03/240 (approx. hydr. 78%) was substituted for the Alcotex 72.5 and 0.4% of Berol 08 (HLB 18.7) was used instead of the 0.3% Igepal CO897. The suspension had the following properties:

| | |
|---|---|
| d50 (µm) | 4.8 |
| d90 (µm) | 10.5 |
| Erichsen viscosity (mPa•s) | 160 |
| Brookfield viscosity (mPa•s) | 4950. |

The suspensions were storage stable for at least 3 months.

### Example 3

A suspension was prepared containing 2% by weight of Unitika UMR10M (approx. hydr. 65%), 0.3% by weight of Berol 08 (HLB 18.7), 0.15% by weight xanthane gum, 0.05% by weight CaO, 40% by weight of Perkadox 16, the remainder being demineralized water.

The suspension showed excellent physical and chemical stability during more than 6 months of storage and had the following properties:

| | |
|---|---|
| d₅₀ (µm) | 4 |
| d₉₀ (µm) | 9 |
| Erichsen viscosity (mPa•s) | 130 |
| Brookfield viscosity (mPa•s) | 1800 |

The PVC produced using this suspension had the following properties:

| | |
|---|---|
| DOP porosity (%) | 24 |
| vol.resistivity (Ωcm) | 12•10¹³ |
| fish eyes (m⁻²) | 25 |
| average particle size (µm) | 155 |
| bulk density (g•ml⁻¹) | 0.40 |

### Example 4

A suspension was prepared containing 1.5% by weight of Polyvic SP808 (approx. hydr. 65%), 0.6% by weight of Brij 35 (HLB 16.9), 0.15% by weight xanthane gum, 0.05% by weight CaO, 40% by weight of Perkadox 16, the remainder being demineralized water.

The suspension had the following properties:

| | |
|---|---|
| Erichsen viscosity (mPa•s) | 170 |
| Brookfield viscosity (mPa•s) | 4120 |

The product was storage stable for at least 3 months.

### Comparative Example A

Example 1 was repeated, except that this time the suspension consisted of 1.5% by weight of Gohsenol KP08 (approx. hydr. 73%), 0.15% by weight of xanthane gum, 0.05% by weight of CaO, 40.0% by weight of Perkadox 16, and 58.25% by weight of water, with the following results.

The suspension was physically and chemically stable during less than 8 weeks of storage and had the following properties:

| | |
|---|---|
| d₅₀ (µm) | 6 |
| d₉₀ (µm) | 19 |
| Erichsen viscosity (mPa•s) | 220 |
| Brookfield viscosity (mPa•s) | 3600 |

The PVC produced using this suspension had the following properties:

| | |
|---|---|
| DOP porosity (%) | 22 |
| vol.resistivity ( Ωcm) | 15•10¹³ |
| fish eyes (m⁻²) | > 5,000 |
| average particle size (µm) | 145 |
| bulk density (g•ml⁻¹) | 0.40 |

### Comparative Example B

Example 1 was repeated, except that Alcotex 552P (average hydrolysis 55.5% but with a substantial amount of material with a degree of hydrolysis below 55%) was substituted for the Alcotex 72.5 and the Igepal CO897 was replaced with Berol 08 (HLB 18.7).

The resulting suspension was very thixotropic and showed unacceptable storage and handling properties.

### Comparative examples C and D

Example 3 was repeated, except that the Berol 08 was replaced with Cedepal E710 (HLB 14.4) and Elfapur T110 (HLB 13.5) in Examples C and D, respectively. Both suspensions were too thick to be handled easily.

### Comparative Example E

Example 3 was repeated, except that 1% by weight of Gohsenol LL02 (approx. hydr. 48%) and 1% by weight of Polyviol M05/190 (approx. hydr. 82.5%) were substituted for the 2% by weight of Unitika UMR10M. The resulting suspension was not storage stable. After two weeks it was too thick to be handled easily.

### Comparative Example F

Example 1 was repeated, except that Gohsenol KH20 (approx. hydr. 80%) was substituted for the Alcotex 72.5. This suspension was too thick to be processable. No representative sample was attainable.

### Comparative Example G

Example 3 was repeated, except that Ethapol 66 (approx. hydr. 66%) was substituted for the Unitika UMR10M. The Ethapol is a mixture of PVAs with low (46%) and high (>76%) degrees of hydrolysis.

This suspension was too thick to be handled easily.

### Examples 5-6

The experiment of Example 1 was repeated, except that the Igepal CO897 was replaced with another non-ionic emulsifier, as indicated in the following table.

| Example | Non-ionic emulsifier | HLB value | Erichsen visc. (mPa•s) | Brookfield (mPa•s) |
|---|---|---|---|---|
| 5 | Brij 35 | 16.9 | 120 | 1350 |
| 6 | Brij 58 | 15.7 | 160 | 1820 |

The products were storage stable.

### Example 7

A suspension was prepared according to procedure 1, using 40% by weight of Perkadox 26, 2.0% by weight of Alcotex 72.5, 0.3% by weight of Berol 08, 0.17% by weight of xanthane gum, and 57.53% by weight of water.

The suspension showed excellent physical and chemical stability during more than 3 months of storage and had the following properties:

| | |
|---|---|
| d₅₀ (µm) | 8.6 |
| d₉₀ (µm) | 20.0 |
| Erichsen viscosity (mPa•s) | 90 |
| Brookfield viscosity (mPa•s) | 1920 |

### Example 8

A suspension was prepared according to procedure 1, using 44.44% by weight of Liladox® 90P (equivalent to 40% by weight of dicetyl peroxydicarbonate), 2.0% by weight of Unitika UMR 10M, 0.7% by weight of Berol 08, 0.15% by weight of xanthane gum, 0.08% by weight of sodium dicarbonate, and 52.63% by weight of water.

The suspension showed good physical and chemical stability during more than 3 months of storage, and had the following properties:

| | |
|---|---|
| d₅₀ (µm) | 5.3 |
| d₉₀ (µm) | 19.9 |
| Erichsen viscosity (mPa•s) | 75 |
| Brookfield viscosity (mPa•s) | 1630 |

## Claims

1. A process to prepare an aqueous suspension comprising:
- 35 to 60% by weight of the total formulation of one or more solid thermally labile organic compounds,
- 0.5-10% by weight of the total formulation of one or more polyvinyl alcohols having an average degree of hydrolysis from 60 to less than 80%, with the proviso that no polyvinyl alcohol with a degree of hydrolysis of less than 55% is employed
- 0.05 to 1% by weight of the total formulation of one or more emulsifiers having an average HLB value from 14.5 to 20.0,
wherein at least one solid thermally labile organic compound is milled in water.

2. A process according to claim 1, wherein at least one solid thermally labile organic compound is milled in an aqueous medium, which medium comprises at least one of said polyvinyl alcohols or at least one of said emulsifiers.

3. A process according to claim 1 or 2, wherein the thermally labile organic compound is selected from diacyl peroxides, peracids, peroxydicarbonates, and mixtures thereof.

4. A process according to claim 3, wherein the thermally labile organic compound is dicyclohexyl peroxydicarbonate, bis(4-tert-butylcyclohexyl) peroxydicarbonate, dimyristyl peroxydicarbonate, dicetylperoxy peroxydicarbonate, didecyl peroxydicarbonate, didecanoyl peroxide, dilauroyl peroxide, or lauric peracid, or a mixture of two or more of these compounds.

5. A process according to any one of claims 1-4, wherein the particle size distribution of the thermally labile organic compound in the final suspension has a d₉₀ of less than 20µm.

6. A process according to claim 5, wherein the particle size distribution of the thermally labile organic compound in the suspension has a d₉₀ of less than 15µm.

7. A process according to any one of the preceding claims, wherein the degree of hydrolysis of the polyvinyl alcohol is from 62 to 78%.

8. A process according to any one of the preceding claims, wherein the emulsifier has an average HLB value from 16.9 to 20.0.

9. A process according to any one of the preceding claims wherein the concentration of the thermally labile organic compound is from 35 to 45% by weight, the concentration of the polyvinyl alcohol is from 1 to 5% by weight, and the concentration of the emulsifier is from 0.05 to 0.8% by weight, all based on the total weight of the formulation.

10. A process according to any one of the preceding claims, wherein the final suspension further comprises a thickener in a concentration up to 2% by weight of the total formulation.

11. A process according to any one of the preceding claims, wherein the final suspension further comprises one or more additives selected from pH-adjusting agents, sequestering agents, and biocides.

12. A process according to any one of the preceding claims, wherein the process involves a mixing step and at least one milling step during which the temperature is controlled at a temperature of 0-15°C, preferably 0-5°C.

13. A suspension of bis(4-tert-butylcyclohexyl) peroxydicarbonate, dimyristyl peroxydicarbonate, lauric peracid, or a mixture thereof, obtainable by a process according to any one of claims 1-12.

14. A suspension according to claim 13 comprising bis(4-tert-butylcyclohexyl) peroxydicarbonate as the sole thermally labile organic compound.

15. A polymerization process wherein vinyl chloride, optionally together with up to 40% by weight of ethylenically unsaturated comonomers, is polymerized using one or more thermally labile organic compounds, characterized in that an aqueous suspension is used that is obtainable by the process as defined in any one of claims 1-12.

16. A polymerization process according to claim 15, characterized in that an aqueous suspension is used comprising just bis(4-tert-butylcyclohexyl) peroxydicarbonate as the thermally labile organic compound.

## Patentansprüche

1. Verfahren zur Herstellung einer wäßrigen Suspension, umfassend:
- 35 bis 60 Gew.%, bezogen auf die Gesamtformulierung, einer oder mehrerer fester, thermisch labiler organischer Verbindungen,
- 0,5 - 10 Gew.%, bezogen auf die Gesamtformulierung, eines oder mehrerer Polyvinylalkohole mit einem durchschnittlichen Hydrolysegrad von 60 bis weniger als 80 %, unter der Voraussetzung, daß kein Polyvinylalkohol mit einem Hydrolysegrad von weniger als 55 % verwendet wird,
- 0,05 bis 1 Gew.%, bezogen auf die Gesamtformulierung, eines oder mehrerer Emulgatoren mit einem durchschnittlichen HLB-Wert von 14,5 bis 20,0,
wobei mindestens eine feste, thermisch labile organische Verbindung in Wasser gemahlen wird.

2. Verfahren nach Anspruch 1, wobei mindestens eine feste, thermisch labile organische Verbindung in einem wäßrigen Medium gemahlen wird, wobei das Medium mindestens einen der Polyvinylalkohole oder mindestens einen der Emulgatoren umfaßt.

3. Verfahren nach Anspruch 1 oder 2, wobei die thermisch labile organische Verbindung aus der Gruppe, umfassend Diacylperoxiden, Persäuren, Peroxydicarbonaten und Mischungen davon, ausgewählt wird.

4. Verfahren nach Anspruch 3, wobei die thermisch labile organische Verbindung Dicyclohexylperoxydicarbonat, Bis(4-tert-butylcyclohexyl)peroxydicarbonat, Dimyristylperoxydicarbonat, Dicetylperoxydicarbonat, Didecylperoxydicarbonat, Didecanoylperoxid, Dilauroylperoxid oder Laurinpersäure oder eine Mischung von zwei oder mehreren dieser Verbindungen ist.

5. Verfahren nach einem der Ansprüche 1 - 4, wobei die Partikelgrößenverteilung der thermisch labilen organischen Verbindung in der Endsuspension einen d₉₀ von weniger als 20 µm aufweist.

6. Verfahren nach Anspruch 5, wobei die Partikelgrößenverteilung der thermisch labilen organischen Verbindung in der Suspension einen d₉₀ von weniger als 15 µm besitzt.

7. Verfahren nach einem der vorangehenden Ansprüche, wobei der Hydrolysegrad des Polyvinylalkohols 62 bis 78 % beträgt.

8. Verfahren nach einem der vorangehenden Ansprüche, wobei der Emulgator einen durchschnittlichen HLB-Wert von 16,9 bis 20,0 aufweist.

9. Verfahren nach einem der vorangehenden Ansprüche, wobei die Konzentration der thermisch labilen organischen Verbindung 35 bis 45 Gew.%, die Konzentration des Polyvinylalkohols 1 bis 5 Gew.% und die Konzentration des Emulgators 0,05 bis 0,8 Gew.% beträgt, jeweils basierend auf dem Gesamtgewicht der Formulierung.

10. Verfahren nach einem der vorangehenden Ansprüche, wobei die Endsuspension desweiteren ein Verdickungsmittel in einer Konzentration bis zu 2 Gew.% der Gesamtformulierung umfaßt.

11. Verfahren nach einem der vorangehenden Ansprüche, wobei die Endsuspension desweiteren einen oder mehrere Zusatzstoffe, ausgewählt aus Mitteln zur pH-Einstellung, Sequestiermitteln und Bioziden, umfaßt.

12. Verfahren nach einem der vorangehenden Ansprüche, wobei das Verfahren einen Mischschritt und mindestens einen Mahlschritt umfaßt, bei dem die Temperatur auf eine Temperatur von 0 - 15 °C, vorzugsweise von 0 - 5 °C, geregelt wird.

13. Suspension von Bis(4-tert-butylcyclohexyl)peroxydicarbonat, Dimyristylperoxydicarbonat, Laurinpersäure oder einer Mischung davon, die durch ein Verfahren nach einem der Ansprüche 1 - 12 erhältlich ist.

14. Suspension nach Anspruch 13, umfassend Bis(4-tert-butylcyclohexyl)peroxydicarbonat als die einzige thermisch labile organische Verbindung.

15. Polymerisationsverfahren, wobei Vinylchlorid, ggf. gemeinsam mit bis zu 40 Gew.% ethylenisch ungesättigten Comonomeren, unter Verwendung einer oder mehrerer thermisch labiler organischer Verbindungen polymerisiert wird, dadurch gekennzeichnet, daß eine wäßrige Suspension verwendet wird, die durch das in einem der Ansprüche 1 bis 12 beanspruchte Verfahren erhältlich ist.

16. Polymerisationsverfahren nach Anspruch 15, dadurch gekennzeichnet, daß eine wäßrige Suspension verwendet wird, die nur Bis(4-tert-butylcyclohexyl)peroxydicarbonat als die thermisch labile organische Verbindung aufweist.

## Revendications

1. Procédé de préparation d'une suspension aqueuse comprenant :
- 35 à 60% en poids de la composition totale d'un ou plusieurs composés organiques solides thermiquement instables,
- 0,5-10% en poids de la composition totale d'un ou plusieurs alcools polyvinyliques ayant un degré moyen d'hydrolyse de 60 à moins de 80%, étant entendu qu'aucun alcool polyvinylique ayant un degré d'hydrolyse inférieur à 55% n'est employé
- 0,05 à 1% en poids de la composition totale d'un ou plusieurs émulsifiants ayant un rapport hydrophilelipophile (RHL) moyen de 14,5 à 20,0,
dans lequel au moins un composé organique solide thermiquement instable est broyé dans l'eau.

2. Procédé selon la revendication 1, dans lequel au moins un composé organique solide thermiquement instable est broyé dans un milieu aqueux, ledit milieu comprenant au moins un desdits alcools polyvinyliques ou au moins un desdits émulsifiants.

3. Procédé selon la revendication 1 ou 2, dans lequel le composé organique thermiquement instable est sélectionné parmi des peroxydes de diacyle, des peracides, des peroxydicarbonates et des mélanges de ces éléments.

4. Procédé selon la revendication 3, dans lequel le composé organique thermiquement instable est du peroxydicarbonate de dicyclohexyle, du peroxydicarbonate de bis(4-tert-butylcyclohexyle), du peroxydicarbonate de dimyristyle, du peroxydicarbonate de dicétylperoxy, du peroxydicarbonate de didécyle, du peroxyde de didécanoyle, du peroxyde de dilauroyle, ou du peracide laurique, ou un mélange de deux ou plus de ces composés.

5. Procédé selon l'une quelconque des revendications 1-4, dans lequel la distribution granulométrique du composé organique thermiquement instable dans la suspension finale a une d₉₀ inférieure à 20 µm.

6. Procédé selon la revendication 5, dans lequel la distribution granulométrique du composé organique thermiquement instable dans la suspension a une d₉₀ inférieure à 15 µm.

7. Procédé selon l'une quelconque des revendications précédentes, dans lequel le degré d'hydrolyse de l'alcool polyvinylique est de 62 à 78%.

8. Procédé selon l'une quelconque des revendications précédentes, dans lequel l'émulsifiant a un RHL moyen de 16,9 à 20,0.

9. Procédé selon l'une quelconque des revendications précédentes, dans lequel la concentration du composé organique thermiquement instable est de 35 à 45% en poids, la concentration en alcool polyvinylique est de 1 à 5% en poids, et la concentration en émulsifiant est de 0,05 à 0,8% en poids, toutes étant basées sur le poids total de la composition.

10. Procédé selon l'une quelconque des revendications précédentes, dans lequel la suspension finale comprend en outre un épaississant en concentration allant jusqu'à 2% en poids de la composition totale.

11. Procédé selon l'une quelconque des revendications précédentes, dans lequel la suspension finale comprend en outre un ou plusieurs additifs sélectionnés parmi des agents correcteurs d'acidité, des agents chélateurs, et des biocides.

12. Procédé selon l'une quelconque des revendications précédentes, qui comprend une étape de mélange et au moins une étape de broyage au cours de laquelle la température est maintenue entre 0 et 15°C, de préférence entre 0 et 5°C.

13. Suspension de peroxydicarbonate de bis(4-tert-butylcyclohexyle), de peroxydicarbonate de dimyristyle, de peracide laurique, ou d'un mélange de ces composés, pouvant être obtenue par un procédé conforme à l'une quelconque des revendications 1-12.

14. Suspension selon la revendication 13, comprenant du peroxydicarbonate de bis(4-tert-butylcyclohexyle) comme seul composé organique thermiquement instable.

15. Procédé de polymérisation dans lequel du chlorure de vinyle, facultativement avec un maximum de 40% en poids de comonomères éthyléniquement non saturés, est polymérisé au moyen d'un ou plusieurs composés organiques thermiquement instables, caractérisé en ce qu'on utilise une suspension aqueuse pouvant être obtenue par le procédé défini dans l'une quelconque des revendications 1-12.

16. Procédé de polymérisation selon la revendication 15, caractérisé en ce qu'on utilise une suspension aqueuse comprenant seulement du peroxydicarbonate de bis(4-tert-butylcyclohexyle) comme composé organique thermiquement instable.
